# EUROPEAN PATENT APPLICATION

(11) **EP 4 451 748 A1**
(43) Date of publication of application: **23.10.2024**
(21) Application number: 23168329.3
(22) Date of filing: 17.04.2023
(51) Int. Cl.: H04W 52/02

(54) **DEVICE WAKE UP PROCESS**

(71) Applicant: Vodafone Group Services Limited, Newbury RG14 2FN (GB)
(72) Inventor: MARTINS, Diogo, London, W2 6BY (GB); KULAKOV, Alexey, London, W2 6BY (GB)
(74) Representative: Boult Wade Tennant LLP

(57) **Abstract**

Telecommunications system, user equipment, or method comprising a primary receiver configured to have a first power mode and a second power mode, wherein the primary receiver consumes more power in the first power mode than when in the second power mode, and wherein the primary receiver is configured to receive a first signal from a base station when in the first power mode, the first signal including information. A secondary receiver configured to receive a second signal from the base station. Means adapted to execute the steps of in response to the secondary receiver receiving the second signal, changing the primary receiver from the second power mode to the first power mode. Using the information included in the first signal to alter one or more parameters that control how the power mode of the primary receiver is changed.

## Description

### Field of the Invention

The present invention relates to a system, method, and user equipment (UE) for waking up UE more effectively.

### Background of the Invention

The battery life of mobile devices or user equipment (UE) is a consideration in 5G systems together with throughput, latency, and reliability. Many operations carried out within individual UEs can be affected its battery life. Therefore, there is an aim to achieve improved energy efficiency and so reduced battery consumption. Study Item TR 38.840 in Release 16 (Rel-16) has led to the adoption of different techniques to reduce the UE's power consumption and RP-221543 introduced further techniques.

In both Release 16 and 17, it was recognized that one procedure that consumes considerable energy in a UE is the paging procedure. The UE can be configured with particular lengths of wake up periods (e.g., in terms of discontinuous reception or DRX cycle) during these times, the UE is able to receive paging signals. The DRX cycle can be extended to allow the UE to sleep for longer periods of time and reduce power consumption, but this leads to increase latency, which is undesirable.

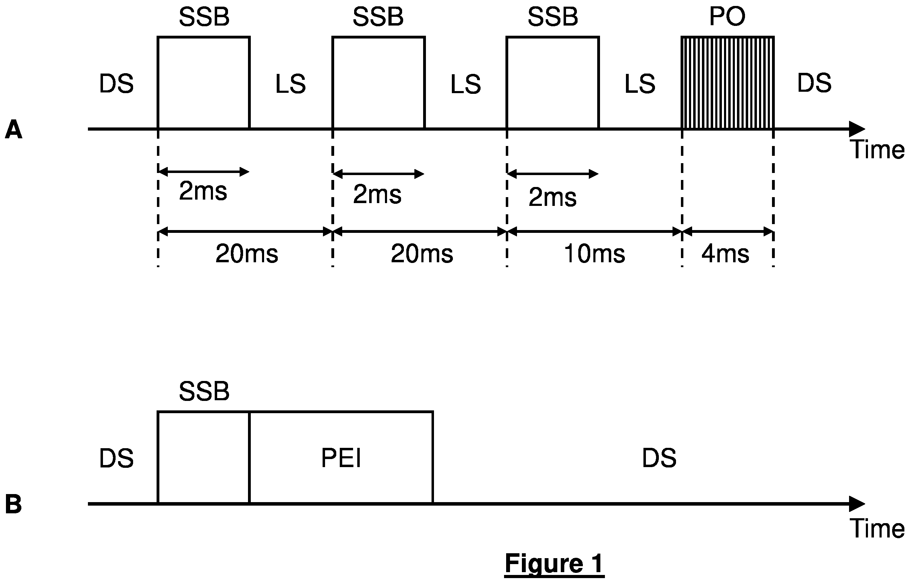

During periods where there is no signalling or data traffic the UE needs to periodically wake up (e.g., once per DRX cycle) in order to perform coarse synchronization by measuring a synchronization block, so that it can receive a paging message (should one be sent). Figure 1 illustrates this procedure and how the UE changes the power mode of the receiver from deep sleep (DS) to a light sleep (LS) period when it can receive a synchronisation signal block (SSB) burst (where an energy overhead occurs) and back into the DS power mode (see the timing diagram A in Figure 1). The SSB and PO duration may be variable, depending on the Subcarrier Spacing and Cyclic Prefix length. This may be configured by the network. Therefore, Figure 1 illustrates an example configuration.

In Release 17 a new behaviour was introduced involving Paging Early Indication (PEI), as shown in timing diagram B in Figure 1, where the gNB or the core network indicates to the UE whether to monitor for any Paging Occasions (PO) or not. The PEI indicates to the UE whether or not it is likely to be paged and for the UE to select a power mode appropriately. As shown in timing diagram B of Figure 1, the PEI indicates to the UE not monitor for a Paging Occasion and so the receiver can enter a deep sleep mode and reduce its power consumption.

In Release 18, a new approach is being considered, which requires an additional new low power receiver within the UE. This low power or secondary receiver is separate from the main or primary receiver. When the secondary receiver receives a signal, it wake the primary receiver. For example, this can occur when the network needs to page the UE (or for other reasons). This secondary or Low Power Wake Up Receiver (LP-WUR) may need to monitor an ultra low power Wake Up Signal (LP-WUS) sent by the gNB and this can indicate whether or not to wake up the main or primary receiver (allowing the primary receiver to stay in deep sleep mode in the meantime).

However, because the primary receiver can then be configured to remain in a low power or deep sleep mode for longer and the secondary receiver has much less sensitivity than the primary receiver (to reduce power consumption) there is a risk that the low powered secondary receiver misses these LP-WUS signals and fails to trigger the primary receiver to change power mode and become able to receive signals, which increases latency.

Therefore, there is required a method and system that overcomes these problems.

### Summary of the Invention

A user equipment (UE), such as a mobile telephone or loT device, contains a primary or main receiver (that is used to communicate with a gNB or base station) and a secondary receiver. The secondary or low power receiver uses much less power than the main receiver but cannot receive the majority of signals used to implement cellular communications. The primary receiver can change from operating in a high power mode, where it can receive signals from a base station to a low power mode where it cannot. In the low power mode, the primary receiver can continue with some limited operations, such as those that control or change the power mode of the primary receiver. For example, the primary receiver can contain a timer so that it switches from low power mode to high power mode at intervals so that the UE can check if any signals are being transmitted to the UE by a telecommunications network. If no signals are received by the primary receiver, then it may return to the low power or sleep mode after a predetermined period. The primary receiver can also be changed to high power mode when it is triggered by the secondary receiver. This occurs when the secondary receiver receives a signal from the base station.

Because the secondary receiver has to operate all of the time it must do so with limited resources. Furthermore, it will not be as sensitive as the primary receiver, which requires more power when it is operating in the high power mode. Therefore, there may be situations when the base station is sending signals to the secondary receiver (attempting to trigger a wake up event) but the secondary receiver is not receiving these signals and so does not wake up the primary receiver or change it to high power mode.

During this time, the UE is not in communication with the network. When the primary receiver changes from low power mode to high power mode (wakes up) it can then receive any missed signal or message that the network has been trying to send. The network includes in this signal data or information that the UE or primary receiver uses to alter how the primary receiver changes its power mode. For example, the network will be aware whether or not the UE has missed any messages and how often they are missed. If they are missed very regularly then the information can indicate that the primary receiver should stay in its high power mode for longer than usual.

Alternatively or additionally, the information can include an indication of the number of signals that were missed by the secondary receiver before it successfully received one and woke up the primary receiver. The UE can compare this with a threshold (e.g., three missed signals). If the number of missed signals is equal or greater than the threshold then the primary receiver determines that it should remain in the high power mode for longer than usual. The information can also change the threshold number and/or the time (e.g., updates a parameter) that the primary receiver remains in the high power mode. The information may also alter (increase or decrease) the timeout time for remaining in sleep or low power mode before returning to high power mode.

Whilst this information that affects how the power mode of the primary receiver is changed is contained with the signals sent to the primary receiver, such information may alternatively or additionally be included in the signals sent to the secondary receiver. Therefore, even if the secondary receiver is missing a certain percentage or ratio of signals, some may get through and can be processed. Therefore, the secondary receiver can pass this information to the primary receiver (or another processor) for processing.

The information may also change the parameters in the other direction so that the primary receiver remains for longer in sleep or low power mode (e.g., if few or no signals are missed by the secondary receiver).

In accordance with a first aspect there is provided a user equipment, UE, comprising:
a primary receiver configured to have a first power mode and a second power mode, wherein the primary receiver consumes more power in the first power mode than when in the second power mode, and wherein the primary receiver is configured to receive a first signal from a base station when in the first power mode, the first signal including information;
a secondary receiver configured to receive a second signal from the base station;

   and
means adapted to execute the steps of:
   in response to the secondary receiver receiving the second signal, changing the primary receiver from the second power mode to the first power mode; and
   using the information included in the first signal to alter one or more parameters that control how the power mode of the primary receiver is changed. When the primary receiver of the UE changes from low power mode to high power mode this may be considered as a wake up event. When the primary received changes from high power mode to low power mode then this may be considered as going to sleep. In the low power mode the primary receive can still carry out some limited operations but cannot receive any first signals (e.g., from the base station or network). Because the first signal includes information then this information can be used to alter how, when and for how long the primary receiver is in its low or high power modes (or any other intermediate power modes). Ideally, the primary receiver is in its low power mode for as long as possible without missing any first signals (which can initiate other actions or communications) although there may be an acceptable threshold for missed signals in order to reduce power requirements. The network may become aware of certain telecommunications traffic changes that affect the individual UE (e.g., increasing or decreasing) or groups of UEs and so change the way that the power modes are changes for the primary receiver of the UE(s). This can improve the reliability of communications with the UE and also result in more optimal power and battery use. The means may be a separate processor, a processor within the primary receiver, or a processor of the UE, for example.

Preferably the means may be further adapted to execute the steps of:
measure a first time period that the primary receiver operates in the second power mode; and
change the primary receiver from the second power mode to the first power mode when the first time period reaches a time threshold. This may be considered as a backup system for bringing the primary receiver into its high power mode even when no signals are received by the secondary receiver to wake up the primary receiver.

Optionally, the one or more parameters for changing how the power mode of the primary receiver is changed may comprise any one or more of:
the time threshold; and
a second time period, wherein the primary receiver is maintained in the first power mode before changing to the second power mode after expiration of the second time period. Further parameters may be included.

Optionally, the information included in the first signal (or information included in the second signal) may comprise data corresponding to a number of second signals transmitted to the secondary receiver before the primary receiver changes from the second power mode to the first power mode,
wherein the means are further adapted to execute the step of:
if the number of second signals transmitted to the secondary receiver before the primary receiver changes from the second power mode to the first power mode and receives a first signal is at or greater than a threshold number then maintaining the primary receiver in the first power mode for a duration of a second time period. This second time period may be longer or shorter than a time period that the primary receiver usually remains in high power mode (i.e., as defined in a stored parameter within the UE). The threshold number may be stored within the UE and may also be altered. Therefore, the first signal may include information indicating a number of repetitions (or a success to failure ratio) of the second signal before being received by the secondary receiver causing the primary receiver to change to high power mode and be able to receive the first signal. The UE (or primary receiver) can use this number of repetitions or ratio to determine how long to maintain the primary receiver in the high power mode. The data corresponding to the number of second signals transmitted to the secondary receiver before the primary receiver changes from the second power mode to the first power mode may be expresses as an absolute number, as a ratio of failures to successes (or successes to failures) or in another way.

Optionally, the information included in the first signal may comprise data corresponding to a number of second signals transmitted to the secondary receiver before the primary receiver changes from the second power mode to the first power mode and receives a first signal,
the one or more parameters for changing how the power mode of the primary receiver is changed further comprises a second time period for maintaining the primary receiver in the first power mode before changing to the second power mode, and
the one or more parameters for changing how the power mode of the primary receiver is changed further comprises a threshold number,
wherein the means are further adapted to execute the step of:
   if the number of second signals transmitted to the secondary receiver before the primary receiver changes from the second power mode to the first power mode and receives a first signal is at or greater than the threshold number then maintaining the primary receiver in the first power mode for a duration of the second time period. Therefore, the first signal may include information indicating a number of repetitions of the second signal before being received by the secondary receiver causing the primary receiver to change to high power mode and able to receive the first signal as well as a new threshold value and/or a new second time period (which may be altered based on the information in the first signal). The second time period may stay the same, be increased or be decreased.

Optionally, the information may further comprise a new threshold number. Therefore, the threshold number (of repetitions or ratio) can be altered dynamically for a single (or multiple) UE.

Preferably, the second time period may be based on the number of second signals transmitted to the secondary receiver before the primary receiver changes from the second power mode to the first power mode. This may be determined by the UE (or primary receiver) or determined by the network and contained within the first signal.

Preferably, the time periods for maintaining the primary receiver in the first power mode before changing to the second power mode may be defined in the information included in the first signal as a number of discontinuous reception (DRX) cycles. Alternatively, they may be defined in absolute time (e.g., 2-20 ms).

Preferably, the primary receiver may further comprise a timer configured to measure a time that the primary receiver has remained in the second power mode. The timer may also be a component of the UE.

According to a second aspect, there is provided a method for operating a user equipment, UE, having a primary receiver and a secondary receiver, the method comprising the steps of:
changing the primary receiver from a second power mode to a first power mode in response to the secondary receiver receiving a second signal from the base station, wherein the first power mode consumes more power than the second power mode;
receiving, at the primary receiver in the first power mode, a first signal including information from a base station; and
using the information included in the first signal to alter one or more parameters that control how the power mode of the primary receiver is changed.

Optionally, the method may further comprise the steps of:
measure a first time period that the primary receiver is operating in the second power mode; and
changing the primary receiver from the second power mode to the first power mode when the first time period reaches a time threshold.

Optionally, the one or more parameters for changing how the power mode of the primary receiver is changed comprises any one or more of:
the time threshold; and
a second time period, wherein the primary receiver is maintained in the first power mode before changing to the second power mode after expiration of the second time period.

Optionally, the information included in the first (or second) signal may comprise data corresponding to a number of second signals transmitted to the secondary receiver before the primary receiver changes from the second power mode to the first power mode and receives a first signal,
the one or more parameters for changing how the power mode of the primary receiver is changed further comprises a second time period for maintaining the primary receiver in the first power mode before changing to the second power mode, and
the one or more parameters for changing how the power mode of the primary receiver is changed further comprises a threshold number,
the method may further comprise the step of:
   if the number of second signals transmitted to the secondary receiver before the primary receiver changes from the second power mode to the first power mode and receives a first signal is at or greater than the threshold number then maintaining the primary receiver in the first power mode for a duration of the second time period.

Optionally, the method may further comprise the step of changing the threshold number to a new threshold number based on information received within the first signal.

Optionally, the first signal may be any one of:
a paging signal;
a paging early indication, PEl, signal, or
a system information block, SIB, signal. The first signal may be a SIB update or any L1, L2 or L3 message, for example.

In accordance with a third aspect, there is provided a telecommunications system comprising:
one or more base stations; and
   one or more user equipment, UE, according to any of those described above.

The methods described above may be implemented as a computer program comprising program instructions to operate a computer. The computer program may be stored on a computer-readable medium, including a non-transitory computer-readable medium.

The computer system may include a processor or processors (e.g., local, virtual or cloud-based) such as a Central Processing Unit (CPU), and/or a single or a collection of Graphics Processing Units (GPUs). The processor may execute logic in the form of a software program. The computer system may include a memory including volatile and nonvolatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
Fig. 1 shows a schematic illustration of the timing of signals between a network and user equipment (UE);
Fig. 2 shows a schematic diagram of a system for initiating communications between the network and the UE;
Fig. 3 shows a flowchart of a method for operating the system of Figure 2;
Fig. 4 shows a further method for operating the system of Figure 2; and
Fig. 5 shows a further method for operating the system of Figure 2.

It should be noted that the figures are illustrated for simplicity and are not necessarily drawn to scale. Like features are provided with the same reference numerals.

### Detailed description of the preferred embodiments

A low power secondary receiver, that is used to wake up a primary receiver, which has different characteristics to the primary receiver in a new radio (NR) user equipment (UE). Preferably, the secondary receiver has reduced complexity so that the primary receiver can be powered down more often whilst keeping the secondary receiver operational and the overall system can then consume less power. This difference and energy saving can be considerable. The primary receiver is configured to receiver certain types of signals (e.g., a first signal or a first signal type) and the secondary receiver is configured to receive a different type of signals (e.g., a second signal or a second signal type). Therefore, the secondary receiver (i.e., a Low Power Wake up Reciever - LP-WUR) consumes less power than the primary receiver (e.g., by at least a factor of 10). To allow this lower complexity, the type of signal that is received by the secondary receiver should also follow a simpler design. The characteristics of such a new (second) signal LP-WUS (Low power wake up signal) can comprise but is not limited to:
1) Lower modulation order (OOK, FSK); and
2) Smaller amount of data to be transmitted

The second signal (LP-WUS) may in some situations be a replacement for (or in addition to) the PEI (Paging Early Indication) functionality, as shown in the timing diagram B of Figure 1, or to be used as trigger to monitor one or more Paging Occasion, e.g., by monitoring the Physical Downlink Control Channel (PDCCH) in the primary receiver, as shown in timing diagram A in Figure 1.

The secondary receiver (LP-WUR) can have a simpler architecture, with lower cost and complexity components when compared with the primary receiver, as the demodulation of the wake up (second) signal will not be as complex as the demodulation of a legacy signal received by the primary receiver, e.g., a NR channel/signal.

For example, the receiver architecture for the secondary receiver may be based on:
1) RF Envelope detection;
2) Heterodyne architecture with Intermediate Frequency envelope detection;
3) Homodyne/zero-Intermediate Frequency architecture with baseband envelope detection; and
4) FSK (Frequency Shift Keying) receiver.

These secondary receiver architectures are optimised for a lower power consumption when compared to the primary receiver, at the cost of lower receiving sensitivity. Primary or main receiver sensitivity values can be found on TS 38.101-1 and can be as low as -96.8 dBm for the reception of a Quadrature phase-shift keying (QPSK) signal for n1 with 15 kHz SCS with a 2RX receiver. For comparison, the type of architectures mentioned above for the secondary receiver can have sensitivity values between -50 to -90 dBm.

By having lower receiving sensitivity when compared to the primary receiver, depending on the second signal (LP-WUS) design, the secondary receiver (LP-WUR) may have coverage performance degradation and so will not always be able to detect the second signal (LP-WUS) indicating that the UE is to be paged. Therefore, there may be no trigger to wake up the primary receiver and so paging (or other) messages may be missed when transmitted by the base station or gNB. If the UE is not able to be paged due to coverage issues from the non-detection of the second signal (LP-WUS), caused by the lower sensitivity of the secondary receiver (LP-WUR), the UE may be left in a state where it doesn't wake up as it was not triggered by the secondary receiver (LP-WUR). This can leave the UE not able to receive paging messages even in the absence of coverage level issues (i.e., if the primary receiver was in a high power mode).

One way to solve this problem it is to allow the UE to fallback to a legacy paging monitoring procedure, i.e., using the primary receiver (with higher sensitivity and corresponding power demands). Therefore, paging messages can be received and decoded in the circumstances where the primary receiver outperforms the secondary receiver (LP-WUR), i.e., in terms of coverage level.

Although the aim of employing a LP-WUR/LP-WUS (second signal/secondary receiver) mechanism is to wake up the primary or main radio when it is triggered by the network, this does not require the primary receiver to be completely shut down. It will instead change to a deeper sleep state and not be completely shut off.

There may be several different power modes or sleep states. An ultra-deep sleep or lowest power mode may be defined relative to a fully active state. The active or highest power state or mode may have a relative power unit of 1. The ultra-deep sleep power state may consume approximately 0.015 times the power of the active state of the primary receiver. This may be found in TR 38.869.

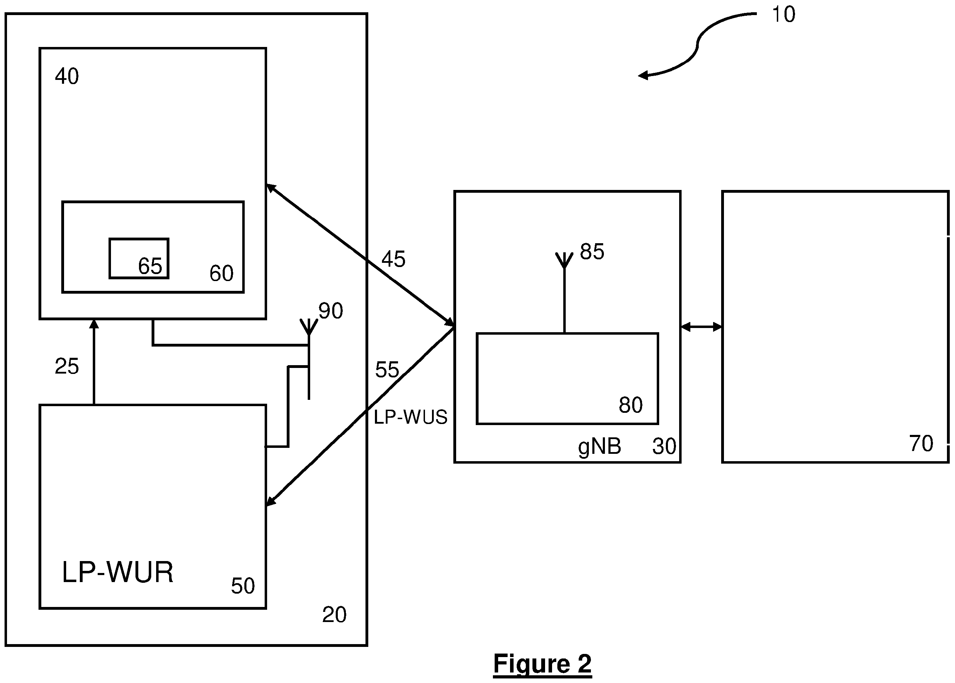

Figure 2 shows a schematic diagram of a system 10 that incorporates a UE 20 and a base station 30 connected to other parts of the network 70. The system 10 may include a plurality of base stations 30 and many UEs 20 but Figure 2 only shows a single UE 20 and base station 30 for simplicity.

The primary receiver 40 and the secondary receiver 50 are shown within the UE 20. Both receivers are shown as being connected to antenna 90 of the UE but there may be separate antennas and each receiver may have its own antenna in certain alternative implementations. A processing means 60 is illustrated with the primary receiver 40 but such processing means may be located elsewhere. The base station 30 also has its own processor 80 that controls how and when the first and second signals are sent from the base station 30 using an antenna 85.

In Figure 2, the system of the first signal 45 is shown between the base station 30 and the primary receiver 40. The second signal 55 is shown schematically also between the base station 30 and the secondary receiver 50. The secondary receiver 50 is shown in communication with the primary receiver 40. In particular, when the secondary receiver 50 receives the second signal 55, a trigger 25 is sent from the secondary receiver 50 to the primary receiver 40, which is processed by the processing means 60 of the primary receiver to change the power state of the primary receiver 40 from any low power modes to a high (or higher) power mode enabling the primary receiver 40 to receive the first signal 45 from the base station 30.

In an example implementation where the first signal is a paging signal, the UE 20 may be paged in an area that may be a tracking area or a RAN based notification area (RNA) depending on the state of the UE 20 (Idle or Inactive). This may include multiple cells. The UE 20 needs to know if a particular cell will support the new signal architecture described above. This indication may be configured as a wake up signal (WUS) configuration (e.g., as part of DownlinkConfigCommonSIB IE within SIB1) and may be sent by the base station (gNB) 30 to all UEs 20. If WUS is supported by the cell (e.g., base station 30) and the UE 20 has a corresponding capability, which is indicated previously to the base station 30, the base station 30 may use the WUS signal to wake up the UE 20. The other parameter associated with a new signal might be the payload of the signal; a number of paging locations associated with the signal; UE identity or UE group identity formats, in case there are different supported formats; Physical layer parameters to assist the UE 20 in monitoring of a new signal; or other parameters.

One of the parameters which may be provided to the UE 20 within a system information block (SIB), e.g., SIB1, may be a fallback threshold. There are at least two alternative ways in which the fallback procedure may be implemented.

### Alternative 1:

An internal clock 65 of the primary receiver or radio 40 is kept running in order to maintain synchronisation of different components. Furthermore, the processing means 60 of the primary receiver is also capable of receiving the wake up instruction or trigger 25 from the secondary receiver 50 (LP-WUR). Even with this functionality, a low power state of the primary receiver 40 can be maintained. The internal timer 65 is monitored by the primary receiver 40 to wake up or return to a high power mode, if no wake up instruction or trigger 25 has been provided by the secondary receiver 50 (LP-WUR) within a time threshold (either static or dynamic). Such a time period may be 1-2 hours, for example.

Procedurally, this behaviour may be described as the following example scenario:
1) Internal timer 65 of the primary receiver 40 is set to 0 (or reset) when the primary receiver 40 is turned on (i.e., changes to a high power mode of operation). The internal timer 65 starts to run as soon as the primary receiver 40 changes power mode to a low power mode (e.g., its ultra-deep sleep mode);
2) Normal functioning of the secondary receiver 50 (LP-WUR) occurs, with the UE 20 having a coverage level that allows it to receive the second signal 55 (LP-WUS) and trigger the primary receiver 40, waking it up if necessary. Timer 65 is set to 0 (e.g., seconds or minutes) again whenever primary receiver 40 is changed to its high power mode (wakes up). Timer 65 starts to run when the primary receiver 40 goes back to a low power mode (e.g., ultra-deep sleep);
3) Coverage level degradation is observed, secondary receiver 50 (LP-WUR) is not able to receive the second signa (LP-WUS) 55. The timer 65 continues to run;
4) When the timer 65 reaches a given threshold (e.g., 2 hours), it automatically wakes the primary receiver 40, which can attempt to monitor for paging occasions (PO) following legacy procedures, going back to sleep (low power mode) if no paging message has been received over a second time period, which may be defined as a preconfigured number of discontinuous reception (DRX) cycles. The timer is set to 0 as the primary receiver 40 wakes up and if there are no received paging messages, then the primary receiver 40 goes back to sleep and sets the timer 65 to run again; and
5) Step 3), 4) may continue until coverage level degradation is not observed by the secondary received (LP-WUR) 50, i.e., returning to Step 1).

### Alternative 2:

Another method that provides a mechanism for the primary receiver 40 to fallback to the legacy paging monitoring procedure is to have the base station 30 (gNB) indicate a number of False Paging receptions, i.e., how many times the base station 30 transmitted the second signal 55 without the primary receiver 40 changing to the high power mode and/or received the first signal 45. This may be defined as a failure ratio or other value. This may be indicated (to the network or base station 30) by failure of the primary receiver 40 (which may include or be linked to a transmitter) in responding to a first signal 45 (e.g., a paging message). A threshold may be predetermined for such false paging reception (i.e., number of repetitions that were required until success) and this threshold may be part of the WUS configuration (similar to the fallback threshold or second time period in alternative 1, described above).

As paging is UE specific, the base station 30 knows how many paging messages (or other first signals 45) following second signals 55 have been sent to a particular UE 20 and how many messages are received back from it, establishing a rate or ratio of Paging Reception Failures. If the base station 30 can report this ratio (or data indicating this ratio) to the UE, it can provide information for the UE 20 to fallback to the legacy paging monitoring procedure. This ratio can be sent in the second signal 55 (LP-WUS) or be included in information with the first signal 45 (when eventually received). Depending on a threshold of this ratio or a number, the UE 20 may fallback to the legacy procedure.

Procedurally, the behaviour may be described as the following example scenario:
1) Normal functioning of the secondary receiver 50 (LP-WUR) being in a coverage level that allows it to receive the second signal 55 (LP-WUS) and trigger the primary receiver or radio 40 to wake up when necessary. When there is a trigger 25 for the primary receive change from a low power mode to a high power mode (woken up), the first signal 45 (and/or a second signal 55, if received) contains the Paging Reception Failures ratio or number. The main receiver 40 stores this ratio, number or other indication of this value;
2) For every occasion where the primary receiver 40 and/or the UE 20 is woken up (changed from low to high power mode), a new ratio may be received and the stored ratio may be updated within the primary receiver 40 or elsewhere within the UE 20. Even though this value or ratio may not be received every time, once received, the UE 20 can become aware of the current failure range or rate;
3) When the ratio reaches a threshold provided in the WUS configuration (or elsewhere), it automatically wakes the primary receiver 40 so that it may perform the legacy paging monitoring procedure; and
4) The criteria to fallback again to the LP-WUR mechanism (i.e., being triggered by the secondary receiver 50) may occur when the coverage level of the secondary receiver 50 (LP-WUR) can be maintained, i.e., operating according to step 1). The process may fall back to using the secondary receiver 50 (LP-WUR) after a time period defined as a number of discontinuous reception (DRX) cycles, which could also be defined as part of WUS configuration.

Alternatives 1 and 2 may be combined or operate in isolation.

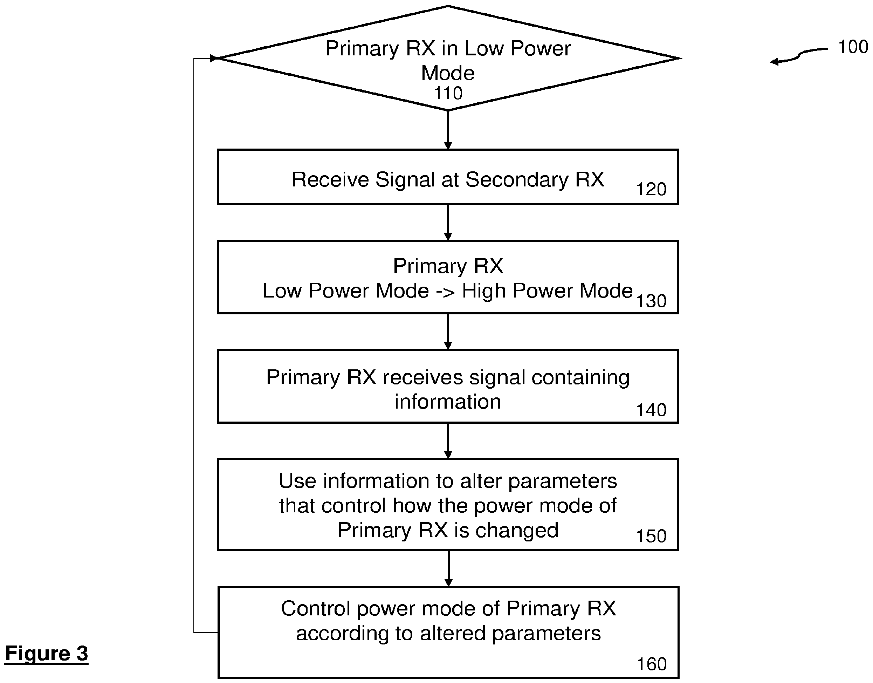

Figure 3 shows a flowchart of a method 100 for operating the system 10 shown in figure 2. The method 100 starts with the primary receiver 40 in low power mode at step 110. As described previously, during the low power mode the primary receiver 40 can carry out some operations such as running the timer 65 but cannot receive the first signal 45 from any base station 30.

At step 120, the secondary receiver 50 receives the second signal 55. This causes a trigger 25 to be sent internally within the UE 20, which causes the primary receiver 40 to switch from low power mode to high power mode at step 130. The primary receiver 40 is therefore in a power mode that enables it to receive the first signal 45 from the base station 30 when it is set.

At step 140, the primary receiver 40 receives the first signal 45 from the base station 30. The first signal 45 includes information or data that the primary receiver 40 can use to alter parameters that control how the power mode of the primary receiver 40 is changed. At step 150, the information within the first signal 45 (or alternatively or additionally within the second signal 55) received by the primary receiver 40 is used to alter these parameters so that the power mode of the primary receiver is changed in a different way to how it was operating before it received the first signal 45. Therefore, the power modes for the primary receiver 40 can be changed in a more optimal way depending on the location of the UE 20 and how effective the secondary receiver 50 is at receiving the second signals 55. For examples, these parameters can change and switch between the two alternative methods described above or provide additional functionality for changing how the power mode of the primary receiver 40 is altered under different circumstances and radio conditions. At step 160, the power mode of the primary receiver 40 is controlled according to the altered (or unaltered) parameters. For example, the primary receiver 40 may remain in its high power mode for longer than normal.

Whilst figure 3 shows the method 100 starting with the primary receiver 40 (primary RX) in the low power mode, it may also start at a different point in the cycle with the primary receiver in the high power mode 40. At this starting point, the primary receiver 40 can receive the signal containing the information (step 140) and use the information to alter the parameters controlling its power mode (step 150). When using these parameters to control the power mode (step 160) the primary receiver 40 will eventually revert to the low power mode (see arrow back to step 110), where the secondary receiver 50 waits to receive the second signal 120, which wakes the primary receiver 40 (step 130) and the cycle can repeat.

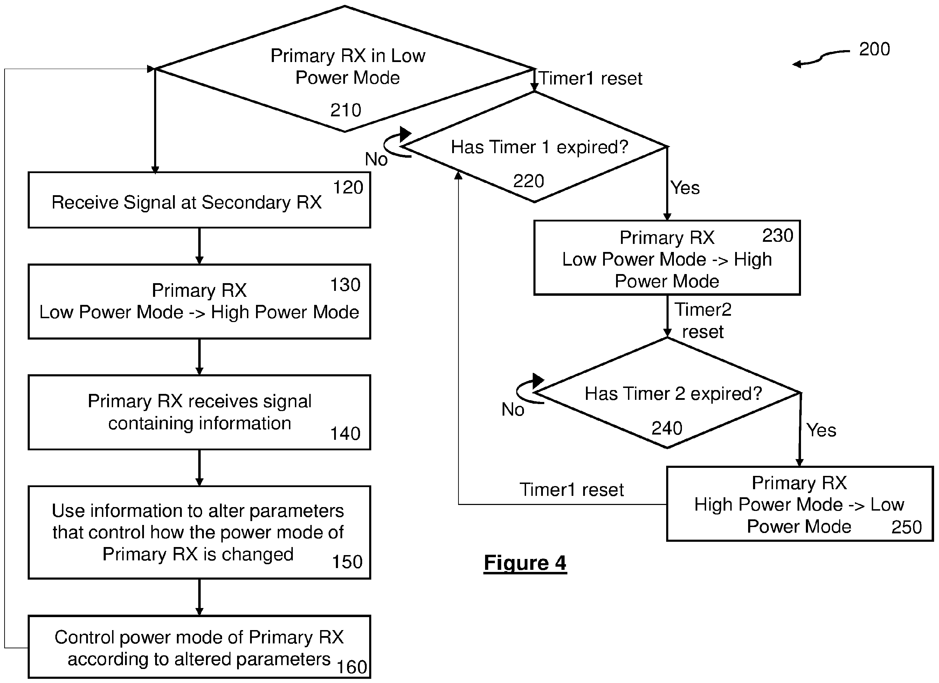

Figure 4 shows a further method 200 for operating the system 10 of Figure 2. This method 200 includes the same method steps as that of method 100 but operates a further parallel procedure in which the primary receiver 40 can fall back to operating in a high power mode even when the secondary receiver 50 fails to receive any second signals 50 from the base station 30 and/or the trigger signal 25 fails to wake the primary receiver 40.

Either process can be used to change the power mode of the primary receiver 40 from low power to high power. With the primary receiver starting in low power mode (step 210) the timer 65 runs until a first time period (timer 1) reaches a time threshold or expires (step 220). After timer 1 has expired then the primary receiver 40 changes from low power mode to high power mode at step 230. The time 65 (or a different timer) may be reset to zero and when the high power mode is set and then runs until a second timer (timer 2) reaches a second time period or threshold at expiration of this second time period at step 240. The primary receiver 40 then changes from the higher power mode to the low power mode at step 250 where timer 1 is reset to zero and is then monitored until timer 1 reaches the first time period value.

The information within the first signal 45 can alter different parameters that control how the power mode of the primary receiver 40 operates. For example, the information may alter either or both of timer 1 and timer 2 (i.e., their expiration or trigger times). Therefore, altering the timer 2 expiry time can be used to increase or decrease the time that the primary receiver 40 is in a high power mode and able to receive the first signal 45. For example, if the network 70 considers it likely that the UE 20 will need to be paged more often then it can include an alteration to the expiry value of timer 2 in the first signal 45 keeping the primary receiver 40 in high power mode for additional DRX cycles, for example. Whilst this uses more power, it can reduce latency. The information within first signal 45 can either temporarily or permanently adjust the expiry time of timer 2. For example, the information may change the timer 2 expiry by a number of DRX cycles or for a particular time with such information also included within the first signal 45. Conversely, when no paging is expected for the UE 20 then the expiry time of timer 1 can be increased and/or timer 2 can be decreased saving power.

The information contained within the first signal 45 may indicate how many second signals 55 have been missed before the UE 20 responds to the base station 30 in a paging or otherwise situation. This ratio or absolute number can be used by the UE 20 or primary receiver 40 to adjust timer 1 and or timer 2 expiry times. For example, when this ratio or number indicates a threshold has been reached then (i.e., too many wakeup signals 55 have been missed or a failure rate has been breached) then the primary receiver 40 can be kept in the higher power mode for longer by increasing the timer 2 expiry time and/or reducing the time that the primary receiver 40 sleeps or remains in the low power mode by reducing the timer 1 expiry time. Again, these changes may be temporary (i.e., expire or revert after a set period) or be permanent, as defined in the information received in the first signal 45.

The thresholds themselves may also be altered as parameters for controlling how the primary receiver power mode is changed. For example, the network 70 may decide that this threshold is rarely breached and so may increase the threshold number or ratio that is acceptable before temporarily increasing the timer 2 expiry time to keep the primary receiver 40 within the high power mode for longer. This can go in both directions.

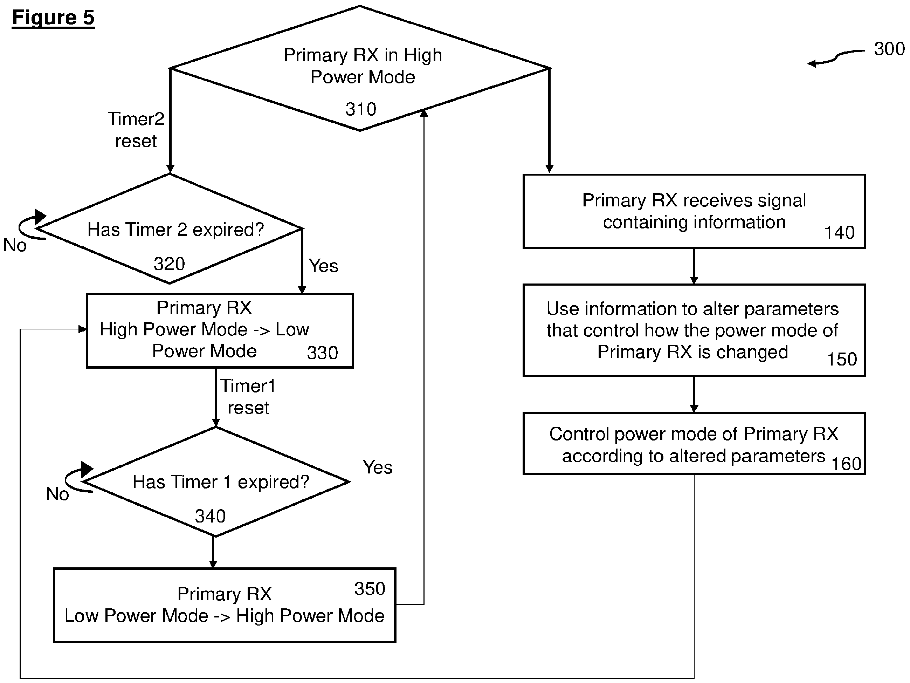

Figure 5 shows a flowchart of a further method 300 for operating the system 10. In this example, the primary receiver 40 starts the process in the high power mode (310) and is able to receive signals containing the information to alter the parameters that control how the primary receiver 40 is changed (steps 140, 150 and 160). At some point in this process, the primary receiver 40 will have its power mode changed from the high power mode to low power mode (arrow from 160 to step 330), when it can no longer receiver signals but can operate the timers. In parallel, timers 1 and 2 operate to periodically change the power mode of the primary receiver between high power mode and low power mode (steps 320, 330, 340 and 350). The thresholds of these timers may also be altered using the information contained within the signal received by the primary (or secondary) receiver 40. Whenever the information is received or changed then the operation of the method 300 may be adjusted.

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" (such as an ion multipole device) means "one or more" (for instance, one or more ion multipole device). Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, whilst the use of the method has been described with reference to a UE, other devices may be used. Many device or UEs maybe present in the telecommunications system as well as many base stations or gNBs. The method has been described with reference to paging messages but other messages may be used.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A user equipment, UE, comprising:
a primary receiver configured to have a first power mode and a second power mode, wherein the primary receiver consumes more power in the first power mode than when in the second power mode, and wherein the primary receiver is configured to receive a first signal from a base station when in the first power mode, the first signal including information;
a secondary receiver configured to receive a second signal from the base station; and
means adapted to execute the steps of:
in response to the secondary receiver receiving the second signal, changing the primary receiver from the second power mode to the first power mode; and
using the information included in the first signal to alter one or more parameters that control how the power mode of the primary receiver is changed.

2. The UE of claim 1, wherein the means are further adapted to execute the steps of:
measure a first time period that the primary receiver operates in the second power mode; and
change the primary receiver from the second power mode to the first power mode when the first time period reaches a time threshold.

3. The UE of claim 1 or claim 2, wherein the one or more parameters for changing how the power mode of the primary receiver is changed comprises any one or more of:
the time threshold; and
a second time period, wherein the primary receiver is maintained in the first power mode before changing to the second power mode after expiration of the second time period.

4. The UE according to any previous claim, wherein
the information included in the first signal comprises data corresponding to a number of second signals transmitted to the secondary receiver before the primary receiver changes from the second power mode to the first power mode and receives a first signal,
the one or more parameters for changing how the power mode of the primary receiver is changed further comprises a second time period for maintaining the primary receiver in the first power mode before changing to the second power mode, and
the one or more parameters for changing how the power mode of the primary receiver is changed further comprises a threshold number,
wherein the means are further adapted to execute the step of:
if the number of second signals transmitted to the secondary receiver before the primary receiver changes from the second power mode to the first power mode and receives a first signal is at or greater than the threshold number then maintaining the primary receiver in the first power mode for a duration of the second time period.

5. The UE of claim 4, where the information further comprises a new threshold number.

6. The UE of claim 4 or claim 5, wherein the second time period is based on the number of second signals transmitted to the secondary receiver before the primary receiver changes from the second power mode to the first power mode.

7. The UE according to any of claims 3 to 6, wherein the time periods for maintaining the primary receiver in the first power mode before changing to the second power mode is defined in the information included in the first signal as a number of discontinuous reception, DRX, cycles.

8. The UE according to any previous claim, wherein the primary receiver further comprises a timer configured to measure a time that the primary receiver has remained in the second power mode.

9. A method for operating a user equipment, UE, having a primary receiver and a secondary receiver, the method comprising the steps of:
changing the primary receiver from a second power mode to a first power mode in response to the secondary receiver receiving a second signal from the base station, wherein the first power mode consumes more power than the second power mode;
receiving, at the primary receiver in the first power mode, a first signal including information from a base station; and
using the information included in the first signal to alter one or more parameters that control how the power mode of the primary receiver is changed.

10. The method of claim 9 further comprising the steps of:
measure a first time period that the primary receiver is operating in the second power mode; and
changing the primary receiver from the second power mode to the first power mode when the first time period reaches a time threshold.

11. The method of claim 10, wherein the one or more parameters for changing how the power mode of the primary receiver is changed comprises any one or more of:
the time threshold; and
a second time period, wherein the primary receiver is maintained in the first power mode before changing to the second power mode after expiration of the second time period.

12. The method of claim 11, wherein
the information included in the first signal comprises data corresponding to a number of second signals transmitted to the secondary receiver before the primary receiver changes from the second power mode to the first power mode and receives a first signal,
the one or more parameters for changing how the power mode of the primary receiver is changed further comprises a third time period for maintaining the primary receiver in the first power mode before changing to the second power mode, and
the one or more parameters for changing how the power mode of the primary receiver is changed further comprises a threshold number,
the method further comprising the step of:
if the number of second signals transmitted to the secondary receiver before the primary receiver changes from the second power mode to the first power mode and receives a first signal is at or greater than the threshold number then maintaining the primary receiver in the first power mode for a duration of the third time period instead of the second time period.

13. The method of claim 12 further comprising the step of changing the threshold number to a new threshold number based on information received within the first signal.

14. The method according to any of claims 9 to 13, wherein the first signal is any one of:
a paging signal;
a paging early indication, PEl, signal, or
a system information block, SIB, signal.

15. A telecommunications system comprising:
one or more base stations; and
one or more user equipment, UE, according to any of claims 1 to 8.
